Europäisches Patentamt

European Patent Office

Office européen des brevets

(19)

(11) **EP 0 732 793 B1**

(12) **EUROPÄISCHE PATENTSCHRIFT**

(45) Veröffentlichungstag und Bekanntmachung des Hinweises auf die Patenterteilung:
**26.05.1999 Patentblatt 1999/21**

(51) Int Cl.⁶: **H02J 9/00**

(21) Anmeldenummer: **96103142.4**

(22) Anmeldetag: **01.03.1996**

(54) **Schaltungsvorrichtung, insbesondere für sicherheitskritische Systeme in Fahrzeugen zur Personenbeförderung**

Circuit device, particularly for safety critical systems in vehicles used for transporting people

Dispositif de circuit, spécialement pour systèmes critiques pour la sécurité dans des véhicules pour transport de personnes

(84) Benannte Vertragsstaaten:
**DE ES FR GB IT SE**

(30) Priorität: **11.03.1995 DE 19508850**

(43) Veröffentlichungstag der Anmeldung:
**18.09.1996 Patentblatt 1996/38**

(73) Patentinhaber: **TEMIC TELEFUNKEN microelectronic GmbH
74072 Heilbronn (DE)**

(72) Erfinder:
• **Fendt, Günther
86524 Schrobenhausen (DE)**

• **Hora, Peter
86524 Schrobenhausen (DE)**
• **Spies, Hans
85278 Pfaffenhofen (DE)**

(74) Vertreter: **Maute, Hans-Jürgen, Dipl.-Ing.
TEMIC TELEFUNKEN microelectronic GmbH
Postfach 35 35
74025 Heilbronn (DE)**

(56) Entgegenhaltungen:
**DE-C- 3 213 003        GB-A- 2 213 600**

• **PATENT ABSTRACTS OF JAPAN vol. 95, no. 002 & JP-A-07 035832 (MATSUSHITA ELECTRIC IND CO LTD), 7.Februar 1995,**

**Beschreibung**

Die Erfindung betrifft eine Schaltungsvorrichtung insbesondere für sicherheitskritische systeme in Fahrzeugen zur Personenbeförderung, mit einer von einer versorgungsspannunsquelle aufladbaren Hilfsspannungsquelle zur Notstromversorgung, gemäß dem Oberbegriff des Patentanspruches 1.

Eine solche Schaltungsanordnung ist aus der JP-A-07 03 58 32 (patent abstracts of Japan vol. 95, no. 002) bekannt, die zur Prüfung des Zustandes einer Batterie deren Entladung bewirkt und dabei die Entladezeit und die Batteriespannung bewertet. Liegen diese Werte unterhalb bestimmter Werte, wird diese Batterie als defekt erkannt.

Bei sicherheitskritischen Systemen, wie z.B. Gurtstraffer, Airbag, Aufprallsensor, Überrollsensor, Unfalldatenschreiber, usw., die insbesondere in Kraftfahrzeugen vorgesehen werden, ist es erforderlich, daß die elektrische oder elektronische Schaltung, die die Betätigung von Fahrzeuginsassen schützenden Elementen und/oder die Erfassung von Fahrzeugsbetriebsdaten steuert, während eines Unfalls auch unabhängig von der normalen versorgungsspannung noch für eine gewisse vorgegebene Zeit, der sogenannten Autarkiezeit, betriebsbereit ist.

Hierfür ist üblicherweise eine von der Versorgungsspannungsquelle aufladbare Hilfsspannungsquelle als Notstromversorgung vorgesehen, die z.B. von einem geeigneten Kondensator gebildet wird. Diese Notstromversorgung ist beispielsweise für den Fall gedacht, daß bei einem Aufprall des Fahrzeugs die Fahrzeugbatterie beschädigt oder abgerissen wird.

Die Hilffsspannungsquelle zur Notstromversorgung ist somit ein für die Funktionsfähigkeit der Sicherheitssyteme wichtiges Bauteil, das zumindest beim Einschalten, vorzugsweise aber auch während des Betriebs der Schaltung wiederholt geprüft werden muß, also einem Prüfungszwang unterliegt.

Daneben sind weitere Hilfsspannungsquellen, üblicherweise Kondensatoren, vorgesehen, um den für die Auslösung eines Alrbags oder die Betätigung eines Gurtstraffers erforderliche Energie zu liefern. Auch diese Hilfsspannungsquellen unterliegen einem Prüfungszwang.

Beim Prüfen einer der Hilfsspannungsquellen wird ermittelt, ob diese ausreichend Energie bereithält, um im Notfall die geforderte Notstromversorgung sicher zustellen oder den gewünschten hohen Strom zu liefern.

Die oben genannte bekannte Schaltungsvorrichtung gemäß der JP-A-07 03 58 32 weist hierzu eine Steuerschaltung, eine Entladeschaltung und eine Spannungsfühlerschaltung zum Erfassen der Ausgangsspannung der Hilfsspannungsquelle auf. Bei der Prüfung wird die Hilfsspannungsquelle mittels der von der Steuerschaltung angesteuerten Entladeschaltung entladen. Am Ende der Testzeit stellt die Steuerschaltung die von der Spannungsfühlerschaltung erfaßte Ausgangsspannung der Hilfsspannungsquelle fest und ermittelt daraus deren Speicherkapazität, also die gespeicherte Energie.

Eine Schaltungsanordnung zur unterbrechungsfreien Stromversorgung eines Verbrauchers gemäß der GB-A-2 213 600 enthält ebenfalls eine Batterie, die zu Testzwecken mit einer von einer Steuerschaltung angesteuerten Entladeschaltung verbunden wird. von einer Spannungsfühlerschaltung wird während des Entladevorgangs die Batteriespannung detektiert, wobei der den Entladungsvorgang beendende Spannungswert vorgegeben wird. Die Bewertung des Zustandes durch die Steuerschaltung der Batterie erfolgt dabei anhand der gemessenen Entladezeit.

Bei überlicherweise als Hilfsspannungsquelle verwendeten Kondensatoren läßt sich deren Kapazität C nach folgender Formel

$$C = I \, t/\Delta U$$

ermitteln. I ist dabei ein definierter Entladestrom, t die Testzeit und $\Delta U$ die Abnahme der Augsgangsspannung des Kondensators.

Die bekannten Schaltungsvorrichtungen haben jedoch den Nachteil, daß bei einer eventuellen Störung der Steuerschaltung während der Prüfung der Entladevorgang nicht mehr rechtzeitig beendet werden kann, so daß es zu einer Tiefentladung der Hilfsspannunsquelle und damit zu einem Zusammenbruch der Versorgungsspannung kommt. Ein Zusammenbruch der Versorgungsspannung kann bei der bekannten Schaltungsanordnung gemäß der JP-A-07 03 58 32 auch bei einer defekten Hilfsspannungsquelle auftreten, wenn sich diese während der Testzeit soweit entlädt, daß die Versorgungsspannung für eine an die versorgungsspannungsquelle angeschlossene elektronische Schaltung nicht mehr aufrecht erhalten werden kann.

Ein derartiger Zusammenbruch der versorgungsspannung hat zur Folge, daß die Schaltungsvorrichtung und die angeschlossene elektronische Schaltung in ihren Ausgangszustand nach einem Einschalten zurückgesetzt werden. Damit wird die Hilfsspannungsquelle von neuem geprüft, was wiederum zu einem Zusammenbruch der versorgungsspannung führt. Die Schaltungsvorrichtung befindet sich damit in einem ständigen Prüfungszustand, ohne daß ein Fehler erkannt wird.

Ausgehend von diesem Stand der Technik liegt der Erfindung die Aufgabe zugrunde, eine weitere Schaltungvorrichtung der eingangs genannten Art zu schaffen, die auch im Falle eines Fehlers in der Steuerschaltung die Stromversorgung einer elektronischen Schaltung weitgehend sicherstellt.

Diese Aufgabe wird durch die Schaltungsvorrichtung nach Anspruch 1 gelöst.

Erfindungsgemäß ist also bei der Schaltungsvorrichtung eine von der Steuerschaltung unabhängige Schutzschaltung vorgesehen, die einen von der Steuerschaltung bewirkten Entladevorgang der Hilfsspannungsquelle zwangsweise unterbricht, wenn die Hilfsspannungsquelle unter einen vorgegebenen Wert ihrer Ausgangsspannung entladen wird. Hierdurch läßt sich sicherstellen, daß die versorgungsspannung im Falle einer Störung der Steuerschaltung einen vorgegebenen Wert nicht unterschreitet, so daß die an die Versorgungsspannungsquelle angeschlossene elektronische Schaltung auch weiterhin funktionsfähig bleibt.

Auch im Falle einer defekten Hilfsspannungsquelle wird ein Zusammenbruch der Versorgungsspannung sicher verhindert, und der Fehler läßt sich erfassen und für Diagnosezwecke speichern.

Wenn der elektronischen Schaltung weitere Hilfsspannungsquellen zur Stromversorgung von Auslöseelementen von Fahrzeuginsassen schützenden Einrichtungen, z.B. Airbag und Gurtstraffer, zugeordnet sind, kann die erfindungsgemäße Schaltungsvorrichtung zweckmäßigerweise mit einer Schaltermatrix ausgestattet sein, so daß im Falle eines Versagens der Hilfsspannungsquelle zur Notstromversorgung eine Hilfsspannungsquelle für die Stromversorgung einer Fahrzeuginsassen schützenden Einrichtung mit geringerer Schutzwirkung zur Notstromversorgung einsetzbar ist.

In entsprechender Weise kann auch eine Hilfsspannungsquelle für eine Fahrzeuginsassen schützende Einrichtung mit höherer Schutzwirkung durch eine Hilfsspannungsquelle für eine Einrichtung mit geringerer Schutzwirkung ersetzt werden.

Durch die erfindungsgemäße Schaltungsvorrichtung läßt sich also die Betriebssicherheit einer Schaltungsanordnung mit einer elektronischen Schaltung, insbesondere für sicherheitsrelevante Systeme in Fahrzeugen erhöhen, wobei ggf. auch eine schaltungstechnische "Reparatur" einer Hilfsspannungsquelle mit höherer Sicherheitsrelevanz durchgeführt werden kann, in dem eine Hilfsspannungsquelle mit geringerer Sicherheitsrelevanz deren Funktion übernimmt.

In den Unteransprüchen sind weiter vorteilhafte Ausgestaltungen der Erfindung beschrieben.

Die Erfindung wird im folgenden beispielsweise anhand der Zeichnung näher erläutert. In dieser zeigt:

Fig. 1    ein schematisches Blockschaltbild einer Schaltungsanordnung nach der Erfindung und

Fig. 2    ein schematisches Blockschaltbild einer weiteren Schaltungsanordnung nach der Erfindung, wobei eine Mehrzahl von zu prüfenden Hilfsspannungsquellen vorgesehen sind.

In den verschiedenen Figuren der Zeichnung sind einander entsprechende Bauteile mit gleichen Bezugszeichen versehen.

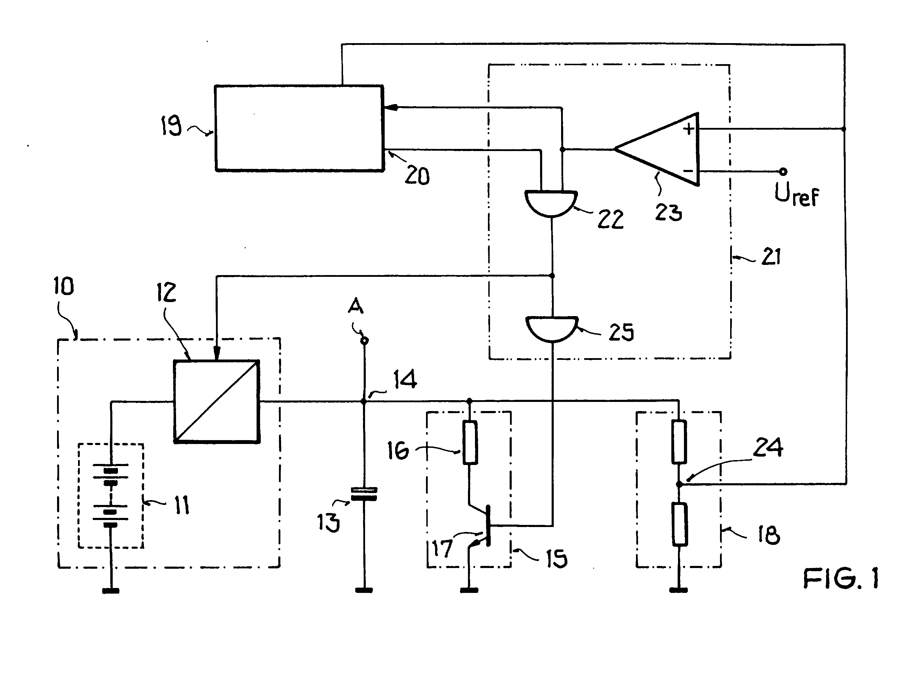

Die in Figur 1 gezeigte Schaltungsanordnung weist eine Versorgungsspannungsquelle 10 mit einer Batterie 11 und einem als Ausgangsschaltkreis der Versorgungsspannungsquelle 10 dienenden Netzteil 12 auf, das z. B. ein Gleichstrom/Gleichstrom- (DC/DC)-Aufwärtswandler sein kann. Ein als Hilfsspannungsquelle dienender Kondensator 13 ist zwischen einen Ausgang des Netzteils 12 und Masse geschaltet, wobei - in nicht näher dargestellter Weise - die über das Netzteil 12 zu versorgenden Elemente der Schaltungsanordnung ebenfalls an den Ausgang 14 des Netzteils angeschlossen sind, wie durch den Anschluß A angedeutet ist.

Der Anschluß des Kondensators 13, der an den Ausgang 14 des Netzteils 12 angeschlossen ist, ist mit einer Entladeschaltung 15 aus einem Entladewiderstand 16 und einem als Schalter dienenden Transistor 17 sowie mit einer als Spannungsteiler aufgebauten Spannungsfühlerschaltung 18 verbunden.

Eine z. B. in einem Mikroprozessor integrierte Steuerschaltung 19 liefert an einem Steuersignalausgang 20 ein Steuersignal zum Überprüfen des Kondensators 13, das über eine Schutzschaltung 21 an die Basis des Transistors 17 und an einen Steuereingang des Netzteils 12 anlegbar ist. Die Schutzschaltung 21 umfaßt eine aus einem UND-Glied 22 und einem Komparator 23 gebildete Torschaltung, die das Steuersignal von der Steuerschaltung 19 in Abhängigkeit vom Ausgangssignal der Spannungsfühlerschaltung 18 durchläßt oder sperrt.

Hierzu ist der Ausgang der Spannungsfühlerschaltung 18, der vom Mittelabgriff 24 des zwischen den mit dem Ausgang 14 des Netzteils 12 verbunden Anschluß des Kondensators 13 und Masse gelegten Spannungsteilers der Spannungsfühlerschaltung 18 gebildet ist, an einen Eingang des Komparators 23 angelegt, dessen anderem Eingang eine Referenzspannung $U_{ref}$ zugeführt ist. Der Ausgang des Komparators 23 ist mit einem Eingang des UND-Gliedes 22 verbunden, an dessen anderem Eingang der Steuersignalausgang 20 der Steuerschaltung 19 angelegt ist. Der Ausgang des UND-Gliedes 22 ist im dargestellten Ausführungsbeispiel über einen Ausgangsschaltkreis 25, der zur Anpassung des Ausgangssignals des UND-Gliedes 22 an die zum Leitendschalten des Transistors 17 erforderlichen Basisspannung dient, an die Basis des Transistors 17 und unmittelbar an den Steuereingang des Netzteils 12 angelegt.

Um eine von der Schutzschaltung 21 erfaßte unzulässigen Entladung des überprüften Kondensators 13 unmittelbar an die Steuerschaltung 19 melden zu können, ist zweckmäßigerweise der Ausgang des Komparators 23 an die Steuerschaltung 19 angelegt.

Die beschriebene Schaltungsanordnung arbeitet wie folgt:

Nach dem Einschalten der Schaltungsanordnung und ggf. auch während ihres Betriebs führt die Steuerschaltung eine Überprüfung des zur Notspannungsversorgung beim Ausfall der Versorgungsspannungsquelle 10 dienenden Kondensators 13 durch. Hierzu wird ein Steuersignal über die Schutzschaltung 21 an die Basis des Transistors 17 angelegt, der daraufhin leitend wird. Der Kondensator 13 wird daher über den Entladewiderstand 16 mit einem definierten Strom I entladen, wobei die Spannung am entsprechenden Anschluß des Kondensators 13 abnimmt. Gleichzeitig wird das Steuersignal dem Netzteil 12 zugeführt, um dieses passiv zu schalten, so daß die Entladung des Kondensators 13 vom Netzteil 12 nicht beeinflußt und die Überprüfung des Kondensators 13 nicht beeinträchtigt wird.

Nach einer vorgegebenen Testzeit t erfaßt die Steuerschaltung 19 das Ausgangssignal der Spannungsfühlerschaltung, um die Kapazität des Kondensators 13 zu ermitteln, schaltet den Transistor 17 nichtleitend und gibt das Netzteil 12 wieder frei, in dem das Steuersignal abgeschaltet wird.

Um eine unzulässige Entladung des Kondensators 13 in folge einer Störung der Steuerschaltung 19, ihres Programmablaufs oder eines Defekts des Kondensators 13 zu vermeiden, wird die Abnahme der Kondensatorspannung bei der Entladung ständig vom Komparator 23 überwacht, der das Ausgangssignal der Spannungsfühlerschaltung 18 mit der Referenzspannung $U_{ref}$ vergleicht. Sobald die Kondensatorspannung unter einen kleinsten zulässigen Wert sinkt, wird die Ausgangsspannung der Spannungsfühlerschaltung 18 kleiner als die Referenzspannung $U_{ref}$ und der Komparator 23 bewirkt, daß das Steuersignal von der Steuerschaltung 19 nicht mehr an die Entladeschaltung 15 und das Netzteil 12 weitergeleitet wird.

Üblicherweise ist die vom Netzteil 12 bewirkte Spannung am Anschluß 14 30 V und darf während der Überprüfung des Kondensators 13 nicht unter 20 V absinken. Zwechmäßigerweise teilt der Spannungsteiler der Spannungsfühlerschaltung 18 auf ein viertel herab und die am Komparator 23 anliegende Referenzspannung beträgt 5 V. Solange also die Kondensatorspannung am Anschluß 14 größer als 20 V ist, ist auch die dem Komparator 23 zugeführte Spannung größer als die Referenzspannung $U_{ref}$ und das Ausgangssignal des Komparators 23 ist logisch 1, so daß das UND-Glied freigegeben ist.

Sinkt jedoch die Kondensatorspannung unter den zulässigen Wert, so schaltet der Ausgang des Komparators 23 auf logisch 0 und sperrt damit das UND-Glied 22, so daß das Steuersignal von der Steuerschaltung 19 nicht mehr an die Entladeschaltung 15 und das Netzteil 12 weitergeleitet wird. Damit wird die Entladung des Kondensators 13 von der Schutzschaltung 21 zwangsweise unterbrochen und ein Absinken der Spannung des Kondensators 13 unter einen zulässigen Wert, z. B. 20 V, verhindert.

Somit läßt sich insbesondere eine defekte Hilfsspannungsquelle, also ein defekter Kondensator 13 von der Steuerschaltung erkennen und das Prüfungsergebnis für eine spätere Diagnose von der Steuerschaltung 19 in einem entsprechenden Speicher speichern. Dabei wird zweckmäßigerweise das Sperren des Steuersignals der Steuerschaltung 19 bewirkende Ausgangssignal des Komparators 23 direkt an die Steuerschaltung 19 angelegt.

Im Falle, daß ein Fehler in der Steuerschaltung 19 oder eine Störung des Programmablaufs zur Überprüfunq des Kondensators 13 aufgetreten ist, sinkt, selbst wenn die Steuerschaltung die Überprüfung des Kondensators 13 ständig wiederholt, die Spannung am Ausgang 14 der Versorgungsspannungsquelle 10 nicht unter die vorbestimmte zulässige kleinste Spannung, bei der die Schutzfunktion noch wirksam ist. Außerdem wird bei der erfindungsgemäßen Schaltungsanordnung erreicht, daß das Netzteil 12 nach dem Einschalten immer sicher auf die kleinste von der Schutzschaltung bestimmte Spannung hochläuft.

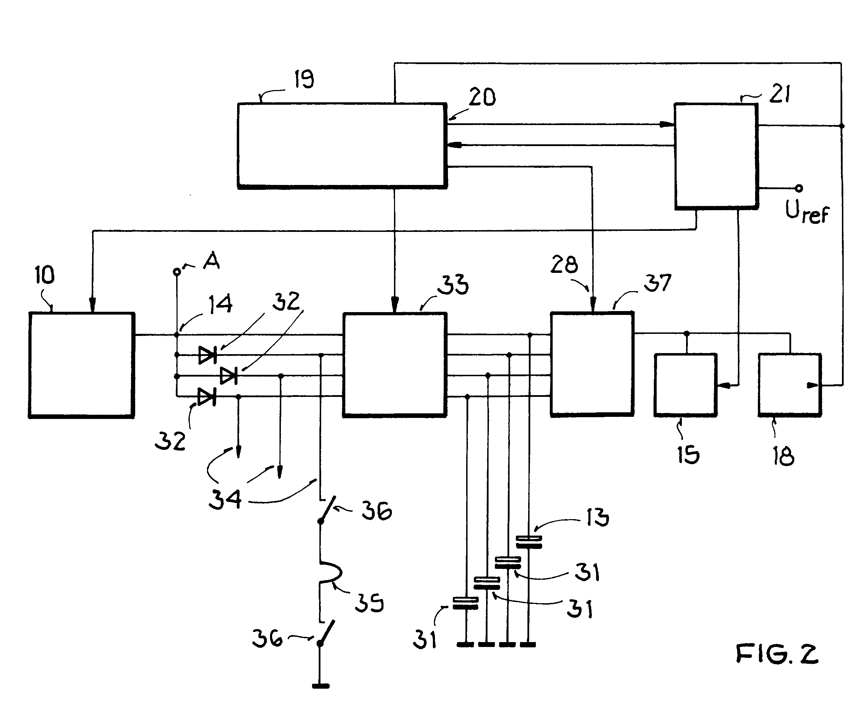

Fig. 2 zeigt eine andere Ausgestaltung der Erfindung, bei der neben den bereits anhand von Fig. 1 erläuterten Bauelementen eine Vielzahl von als Hilfsspannungsquellen für Auslöseeinrichtungen für Fahrzeuginsassen schützende Einrichtungen dienende Kondensatoren 31 vorgesehen ist. Die Kondensatoren 31 sind über Dioden 32 aufweisende und nur durch diese angedeutete Ladeschaltungen und eine erste Schaltereinrichtung 33 mit dem Ausgang 14 der Versorgungsspannungsquelle 10 verbunden. Zwischen den Dioden 32 und der ersten Schaltereinrichtung 33 zweigen Anschlußleitungen 34 zu den von den Kondensatoren 31 im Notfall mit einem Betätigungsstrom zu versorgenden Auslöseeinrichtungen ab.

Die Auslöseeinrichtungen, von denen nur eine, z. B. die Zündeinrichtung 35 eines Airbags, schematisch dargestellt ist, werden aus Sicherheitsgründen mittels Schaltern 36 auf einem schwimmenden Potential gehalten.

Um die als Hilfsspannungsquellen dienenden Kondensatoren 31 und den Kondensator 13 der Notstromversorgung einzeln überprüfen zu können, sind sie über eine zweite, von der Steuerschaltung 19 beaufschlagbare Schaltereinrichtung 37 mit der Entladeschaltung 15 und der Spannungsfühlerschaltung 18 verbunden.

Die Prüfung der einzelnen Hilfsspannungsquellen erfolgt im wesentlichen wie anhand von Fig. 1 beschrieben, wobei zusätzlich zu dem die Entladeschaltung 15 aktivierenden Signal ein Auswahlsignal von der Steuerschaltung 19 über eine Steuerleitung 38 an die zweite Schaltereinrichtung 37 angelegt wird. Anstelle des dargestellten Aufbaus der Schaltungsvorrichtung kann auch vorgesehen sein, daß die Kondensatoren 13, 31 über die zweite Schaltereinrichtung 37 direkt an einen Entladewiderstand anschließbar sind, um diese zur Überprüfung mit einem definierten Entladestrom zu entladen. In diesem Fall muß das entsprechende, an die zweite Schaltereinrichtung angelegte Steuersignal der Steuerschaltung 19 über die Schutzschaltung 31 geführt werden.

Stellt die Steuerschaltung 19 bei der Überprüfung eines der Kondensatoren 13, 31 fest, daß dieser defekt ist, so speichert sie den festgestellten Fehler und beaufschlagt die erste Schaltereinrichtung 33 derart, daß der defekte Kondensator, falls er eine höhere Sicherheitsrelevanz aufweist, also falls es sich z. B. um den Kondensator 13 zur Notstromversorgung oder um den Kondensator 31 für die Airbag-Zündeinrichtung 35 handelt, durch einen Kondensator 31 mit geringerer Sicherheitsrelevanz ersetzt wird.

Im Falle eines defekten Kondensators 13 zur Notstromversorgung wird dabei ein anderer Kondensator 31 unter Umgehung der zugeordneten Ladeschaltung 32 mit dem Ausgang 14 der Versorgungsspannungsquelle 10 verbunden und die Verbindung zum defekten Kondensator 13 wird unterbrochen. In entsprechender Weise kann auch ein defekter Kondensator 31 für die Airbag-Zündeinrichtung 35 von der Zündeinrichtung 35 und seiner Ladeschaltung 32 getrennt werden, während ein anderer'geeigneter Kondensator 31, z. B. der für die Zündeinrichtung eines Gurtstraffers an die Zündeinrichtung 35 für den Airbag angeschlossen wird.

Die vorliegende Erfindung ermöglicht also die sichere Erkennung einer defekten Hilfsspannungsquelle, ohne daß die Gefahr besteht, daß die Spannungsversorgung für die Schutzeinrichtung in folge eines Fehlers zusammenbricht, wobei im Falle einer defekten Hilfsspannungsquelle diese in einfacher Weise mittels einer geeigneten Schaltereinrichtung durch eine andere Hilfsspannungsquelle ersetzbar ist.

**Patentansprüche**

1. Schaltungsvorrichtung, insbesondere für sicherheitskritische Systeme in Fahrzeugen zur Personenbeförderung, mit einer von einer Versorgungsspannungsquelle (10) aufladbaren Hilfsspannungsquelle (13) zur Notstromversorgung einer elektronischen Schaltung und mit einer Steuerschaltung (19) zur Durchführung einer Speicherkapazitätsprüfung der Hilfsspannungsquelle (13), wobei zur Durchführung der Speicherkapazitätsprüfung mittels einer von der Steuerschaltung (19) steuerbaren Entladeschaltung (15) eine Zwangsentladung der Hilfsspannungsquelle (13) durchgeführt wird, und eine mit der Steuerschaltung (19) verbundenen Spannungsfühlerschaltung (18) zum Erfassen der Ausgangsspannung der Hilfsspannungsquelle (13), dadurch gekennzeichnet, daß eine von der Steuerschaltung (19) unabhängige Schutzschaltung (21) vorgesehen ist, die einen von der Steuerschaltung (19) bewirkten Entladevorgang der Hilfsspannungsquelle (13) zwangsweise unterbricht, wenn die Hilfsspannungsquelle (13) unter einen vorgebenenen Wert ihrer Ausgangsspannung entladen wird.

2. Schaltungsvorrichtung nach Anspruch 1, wobei die Schutzschaltung (21) eine vom Ausgangssignal der Spannungsfühlerschaltung (18) beaufschlagte Torschaltung (22, 23) umfaßt, über die ein Steuersignal der Steuerschaltung (19) an die Entladeschaltung (15) und an einen Ausgangsschaltkreis (12) der Versorgungsspannungsquelle (10) anlegbar ist.

3. Schaltungsvorrichtung nach Anspruch 2, wobei die Torschaltung einen Komparator (23) zum Vergleichen des Ausgangssignals der Spannungsfühlerschaltung (18) mit einer Referenzspannung ($U_{ref}$), und ein logisches Glied (22), vorzugsweise ein UND-Glied, aufweist, das vom Ausgangssignal des Komparators (23) beaufschlagt wird, um das Steuersignal der Steuerschaltung (19) zu sperren oder weiterzuleiten.

4. Schaltungsvorrichtung nach Anspruch 1, 2 oder 3, wobei die Schutzschaltung (21) ein eine unzulässigen Entladung der jeweils überprüften Hilfsspannungsquelle (13) anzeigendes Signal an die Steuerschaltung (19) liefert.

5. Schaltungsvorrichtung nach Anspruch 3 und 4, wobei das Ausgangssignal des Komparators (23) an die Steuerschaltung (19) angelegt ist.

6. Schaltungsvorrichtung nach einem der vorhergehenden Ansprüchen, wobei eine Mehrzahl von mittels der Prüfschaltung prüfbarer Hilfsspannungsquellen (13, 31) vorgesehen ist, die über eine Schaltereinrichtung (33) an die jeweils von ihnen zu versorgenden Schaltungen oder Schaltkreise (35, 36) angelegt sind, und wobei die Schaltereinrichtung (33) von der Steuerschaltung (19) derart beaufschlagt wird, daß im Falle eines ermittelten Defekts einer Hilfsspannungsquelle (13, 31) mit höherer Sicherheitsrelevanz eine Hilfsspannungsquelle (31) mit geringerer Sicherheitsrelevanz die Funktion der defekten Hilfsspannungsquelle (13, 31) übernimmt.

**Claims**

1. Circuit device, particularly for systems critical with regard to safety in vehicles used to transport passengers, having an auxiliary power source (13) chargeable from a supply voltage source (10) for supplying emergency power to an electronic circuit and having a control circuit (19) for effecting a check of the storage capacity of the auxiliary power source (13), wherein for effecting the storage capacity check a positive discharge of the auxiliary power source (13) is effected by means of a discharge circuit (15) controllable by the control circuit (19), and a voltage detector circuit (18), which is connected to the control circuit (19), for acquiring the output voltage of the auxiliary power source (13), characterized in that a protection circuit (21) is provided, which is independent of the control circuit (19) and positively interrupts a discharge process of the auxiliary power source (13) effected by the control circuit (19) when the auxiliary power source (13) is discharged below a preset value of its output voltage.

2. Circuit device according to claim 1,
wherein the protection circuit (21) comprises a gate circuit (22, 23), which is acted upon by the output signal of the voltage detector circuit (18) and via which a control signal of the control circuit (19) may be supplied to the discharge circuit (15) and to an output circuit (12) of the supply voltage source (10).

3. Circuit device according to claim 2,
wherein the gate circuit comprises a comparator (23) for comparing the output signal of the voltage detector circuit (18) with a reference voltage ($U_{ref}$), and a logic element (22), preferably an AND element, which is acted upon by the output signal of the comparator (23) in order to block or relay the control signal of the control circuit (19).

4. Circuit device according to claim 1, 2 or 3,
wherein the protection circuit (21) supplies a signal indicating an inadmissible discharge of the respective checked auxiliary power source (13) to the control circuit (19).

5. Circuit device according to claim 3 and 4,
wherein the output signal of the comparator (23) is supplied to the control circuit (19).

6. Circuit device according to one of the preceding claims,
wherein a plurality of auxiliary power sources (13, 31) checkable by means of the test circuit are provided, which are connected by a switch device (33) to the respective circuits (35, 36) they are to supply, and wherein the switch device (33) is acted upon by the control circuit (19) in such a way that, in the event of a defect being detected in an auxiliary power source (13, 31) of higher relevance to safety, an auxiliary power source (31) of less relevance to safety takes over the function of the defective auxiliary power source (13, 31).

**Revendications**

1. Dispositif de circuit, en particulier pour systèmes critiques pour la sécurité dans des véhicules pour le transport de personnes, comportant une source de tension auxiliaire (13), pouvant être rechargée par une source de tension d'alimentation (10), pour l'alimentation en courant de secours d'un circuit électronique, et comportant un circuit de commande (19) pour procéder à une vérification de la capacité de stockage de la source de tension auxiliaire (13), dans lequel, pour l'exécution de la vérification de la capacité de stockage est exécutée, au moyen d'un circuit de décharge (15) que peut commander le circuit de commande (19), une décharge forcée de la source de tension auxiliaire (13), ainsi qu'un circuit (18) de détection de la tension, relié au circuit de commande (19), pour saisir la tension de sortie de la source de tension auxiliaire (13), caractérisé par le fait qu'est prévu un circuit de protection (21) qui est indépendant du circuit de commande (19) et qui interrompt obligatoirement le processus de décharge, opéré par le circuit de commande (19), de la source de tension auxiliaire (13) si la source de tension auxiliaire (13) se décharge en dessous d'une valeur prescrite de sa tension de sortie.

2. Dispositif de circuit selon la revendication 1,
dans lequel le circuit de protection (21) comporte un circuit de porte (22, 23) qui est influencé par le signal de sortie du circuit (18) de détection de la tension et par l'intermédiaire duquel un signal de commande du circuit de commande (19) peut être appliqué au circuit de décharge (15) et à une ligne de mise en circuit initiale (12) de la source de tension d'alimentation (10).

3. Dispositif de circuit selon la revendication 2,
dans lequel le circuit de porte présente un comparateur (23) pour comparer un signal de sortie du circuit (18) de détection de la tension avec une tension de référence ($U_{ref}$) et une porte logique (22), de préférence une porte ET, qui est influencée par le signal de sortie du comparateur (23) pour arrêter ou transmettre le signal de commande du circuit de commande (19).

4. Dispositif de circuit selon la revendication 1, 2 ou 3,
dans lequel le circuit de protection (21) fournit au circuit de commande (19) un signal indiquant une décharge non autorisée de la source de tension auxiliaire (13) respectivement en cours de vérification.

5. Dispositif de circuit selon la revendication 3 ou 4,
dans lequel le signal de sortie du comparateur (23) est appliqué au circuit de commande (19).

6. Dispositif de circuit selon l'une des revendications précédentes,
dans lequel sont prévues une pluralité de sources de tension auxiliaire (13, 31) qui peuvent être vérifiées au moyen du circuit de vérification et qui, par l'intermédiaire d'un organe de commutation (33), sont appliquées aux circuits ou aux lignes de circuit (35, 36) qu'elles doivent respectivement alimenter, et dans lequel l'organe de commutation (33) est influencé par le circuit de commande (19) de façon que, si est déterminé un défaut d'une source de tension auxiliaire (13, 31) plus immédiatement en rapport avec la sécurité, c'est une source de tension auxiliaire (31) moins immédiatement en rapport avec la sécurité qui assume la fonction de la source de tension auxiliaire (13, 31) défectueuse.

FIG. 1

EP 0 732 793 B1

8

FIG. 2

EP 0 732 793 B1